# FASCICULE DE BREVET EUROPEEN

(11) **EP 3 849 461 B1**
(45) Date de publication et mention de la délivrance du brevet: **17.04.2024**
(21) Numéro de dépôt: 19768770.0
(22) Date de dépôt: 10.09.2019
(51) Int. Cl.: A61C 8/00

(54) **SYSTÈME D'IMPLANTS DENTAIRE**
ZAHNIMPLANTATSYSTEM
DENTAL IMPLANT SYSTEM

(30) Priorité: 14.09.2018 FR 1858275
(43) Date de publication de la demande: 21.07.2021
(73) Titulaire: Euroteknika, 74700 Sallanches (FR)
(72) Inventeur: LEGER, Théo, 74700 Domancy (FR); LANCIEUX, Cédric, 74120 Megève (FR); PINTO, Albert, 75016 Paris (FR); TARRAGANO, Hervé, 75008 Paris (FR)
(74) Mandataire: Novaimo
(86) Numéro de dépôt international: PCT/EP2019/074139
(87) Numéro de publication internationale: WO 2020/053228

(56) Documents cités:
- EP-A1- 2 497 441
- WO-A1-2004/012622
- RU-C2- 2 262 324
- US-A1- 2016 022 384

## Description

La présente invention concerne un système d'implants.

La présente solution concerne également un procédé de définition d'une restauration d'une dent donnée d'un patient, qui ne fait pas partie de l'invention.

Un implant dentaire est généralement utilisé pour remplacer une dent manquante ou qui aurait été préalablement retirée. La pose d'un tel implant requiert une série d'étapes chirurgicales pour implanter une dent artificielle.

L'implant est implanté dans un os alvéolaire de la mâchoire où la dent a été retirée. Cet implant est formé d'un matériau biocompatible pour remplacer la racine de la dent endommagée. Ce matériau biocompatible peut comprendre un alliage à base de titane, de dioxyde de zirconium ou comprendre un polymère tel que le polyétheréthercétone (couramment dénommé « PEEK »).

Cependant, la dureté de l'os alvéolaire au niveau de la zone d'implantation n'est pas connue et peut varier selon les individus ou la position de la dent retirée.

On connaît le document EP2497441A1 proposant un système comprenant au moins deux implants. Les deux implants ont un corps d'un même diamètre mais la profondeur des spires du filetage est différente pour chaque implant. Le chirurgien peut ainsi choisir l'implant adéquat en fonction de la dureté de l'os. Le document US20160022384 divulgue de même des implants comprenant tous le même corps, ce qui est proche de l'enseignement du document EP2497441A1. Le document RU2262324 décrit aussi différents implants.

Cependant, ces systèmes présentent des inconvénients. En particulier, la variation de la profondeur des spires ne permet pas à elle seule de garantir une stabilité suffisante de l'implant, notamment si l'os alvéolaire est moins dur que prévu.

Le but de l'invention est de fournir une solution d'implants remédiant aux inconvénients ci-dessus et améliorant les systèmes d'implant connus de l'art antérieur. En particulier, l'invention permet de réaliser un système d'implants ayant, une fois monté, une stabilité suffisante quelle que soit la dureté de l'os alvéolaire.

Selon un premier aspect qui ne fait pas partie de l'invention, une solution concerne un procédé de définition d'une restauration dentaire pour le remplacement d'une dent donnée d'un patient. Ledit procédé comprend une étape de sélection d'un implant en fonction de la densité osseuse présente au niveau de la dent donnée, parmi au moins deux implants présentant un corps principal sensiblement de même diamètre au niveau de leur col et de diamètre différent sur au moins une section transversale en partie inférieure de l'implant.

Avantageusement, les corps principaux de ces implants comprennent un filetage, et le diamètre maximal des filets, notamment des spires, dudit filetage est supérieur audit diamètre du col de l'implant ou du diamètre dudit corps principal au niveau du col.

Dans un mode de réalisation, les au moins deux implants comprennent des filets différents, dont la profondeur et/ou le pas est différent.

Dans un mode de réalisation, le diamètre de la au moins une section transversale en partie inférieure, la profondeur des filets et/ou le pas des filets d'un premier implant sont respectivement inférieurs au diamètre de la au moins une même section transversale en partie inférieure, à la profondeur des filets et/ou au pas des filets d'un deuxième implant.

Dans un mode de réalisation, l'étape de sélection comprend la sélection d'un implant parmi trois implants présentant un corps principal sensiblement de même diamètre au niveau de leur col et de diamètre différent en partie inférieure, de la manière suivante :
- pour un os dur, choix d'un premier implant comprenant un premier diamètre sur au moins une section transversale en partie inférieure et un filet comprenant un premier pas et une première profondeur ;
- pour un os de densité moyenne, choix d'un deuxième implant comprenant un deuxième diamètre supérieur au premier diamètre sur la au moins une section en partie inférieure, et un filet comprenant un deuxième pas et une deuxième profondeur, ledit deuxième pas et/ou la deuxième profondeur étant respectivement supérieur.e.s audit premier pas et/ou à ladite première profondeur ;
- pour un os tendre, choix d'un troisième implant comprenant un troisième diamètre supérieur au deuxième diamètre sur la au moins une section en partie inférieure, et un filet comprenant un troisième pas et une troisième profondeur, ledit troisième pas et/ou la troisième profondeur étant respectivement supérieur.e.s audit deuxième pas et/ou à ladite deuxième profondeur.

Dans un mode de réalisation, le corps principal des au moins deux implants présente une ou plusieurs partie.s conique.s de conicité différente et/ou un corps principal de section d'aire décroissante longitudinalement d'une zone supérieure vers son extrémité inférieure.

L'invention concerne un système d'implants comprenant au moins deux implants destinés au remplacement d'une même dent donnée d'un patient lors d'une restauration dentaire, choisis en fonction de la densité osseuse présente au niveau de la dent à restaurer, lesdits au moins deux implants présentant un corps, constituant une tige centrale des implants, sensiblement de même diamètre au niveau de leur col et de diamètre différent sur au moins une section transversale en partie inférieure de l'implant. Les au moins deux implants comprennent des filets, et le diamètre maximal du filet de chaque implant est supérieur audit diamètre au niveau de leur col.

Dans un mode de réalisation, les au moins deux implants comprennent des filets différents, notamment dont la profondeur et/ou le pas est différent.

Dans un mode de réalisation, le diamètre de la au moins une section transversale en partie inférieure, et la profondeur des filets et/ou le pas des filets, d'un premier implant sont respectivement inférieurs au diamètre de la au moins une même section transversale en partie inférieure, et à la profondeur des spires et/ou au pas des filets, d'un deuxième implant.

Dans un mode de réalisation, le système d'implant comprend trois implants présentant un corps principal sensiblement de même diamètre au niveau de leur col et de diamètre différent au niveau d'au moins une section transversale en partie inférieure. Lesdits trois implants comprennent :
- un premier implant comprenant un premier diamètre au niveau d'au moins une section transversale en partie inférieure et un filet comprenant un premier pas et une première profondeur ;
- un deuxième implant comprenant un deuxième diamètre au niveau de la au moins une même section transversale en partie inférieure supérieur au premier diamètre, et un filet comprenant un deuxième pas et une deuxième profondeur, ledit deuxième pas et/ou la deuxième profondeur étant respectivement supérieur.e.s audit premier pas et/ou à ladite première profondeur ;
- un troisième implant comprenant un troisième diamètre au niveau d'au moins une section transversale en partie inférieure supérieur au deuxième diamètre, et un filet comprenant un troisième pas et une troisième profondeur, ledit troisième pas et/ou la troisième profondeur étant respectivement supérieur.e.s audit deuxième pas et/ou à ladite deuxième profondeur.

Dans un mode de réalisation, le corps principal des au moins deux implants présente une ou plusieurs partie.s conique.s de conicité différente et/ou le corps principal des au moins deux implants présente une section transversale d'aire décroissante longitudinalement d'une zone supérieure vers son extrémité inférieure.

Dans un mode de réalisation, chacun des corps principaux des au moins deux implants comprend en outre une partie de guidage d'entrée s'étendant depuis une extrémité inférieure du corps principal, cette partie de guidage comprenant une portion hémisphérique.

Dans un mode de réalisation, chacun des corps principaux des au moins deux implants comprend au moins une portion de bords coupants disposée dans le filetage et s'étendant de manière oblique vers la portion de guidage d'entrée le long d'une direction circonférentielle du corps.

Dans un mode de réalisation, le col des au moins deux implants comprend une partie biseautée au niveau d'une extrémité supérieure.

Dans un mode de réalisation, la partie biseautée présente une surface extérieure rugueuse, notamment obtenue par sablage.

Dans un mode de réalisation, chaque implant comprend une partie de connexion identique destinée à recevoir une partie d'un pilier pour sa fixation à l'implant.

Selon un troisième aspect, l'invention concerne enfin un ensemble de restauration caractérisé comprenant un système d'implant selon le deuxième aspect de l'invention et comprenant en outre une vis d'implant et un pilier, la vis d'implant étant apte à fixer ledit pilier sur chaque implant dudit système d'implants.
Les figures annexées représentent, à titre d'exemple, un mode de réalisation d'un implant d'un système d'implants selon l'invention.
Les figures 1A et 1B représentent un premier implant selon un mode de réalisation de l'invention.
La figure 2 est une vue en perspective du premier implant selon un mode de réalisation comprenant une portion de bords coupants oblique.
La figure 3 représente trois implants selon l'invention dont les diamètres supérieurs sont égaux et les diamètres inférieurs sont différents.
La figure 4 est une vue en perspective d'un premier implant selon un mode de réalisation de l'invention comprenant une partie de connexion depuis une extrémité supérieure du corps.
La figure 5 est une vue de dessus d'un premier implant selon un mode de réalisation de l'invention comprenant une partie supérieure évidée.
La figure 6A représente un premier système d'implant comprenant premier implant selon un mode de l'invention et un pilier du système d'implant.
La figure 6B est une vue en coupe du premier système d'implant.
La figure 7A est une vue éclatée du premier système d'implant.
La figure 7B est une vue éclatée et en coupe du premier système d'implant.

Les termes « inférieur » et « supérieur » se réfèrent ici à la situation dans laquelle le système de fixation est implanté. Une partie supérieure désigne une partie plus proche de la partie de l'implant qui se trouve en dehors de l'os alvéolaire et une partie inférieure désigne une partie plus proche du point de l'implant destiné à être implanté en premier dans l'os alvéolaire. La direction longitudinale sera définie selon la longueur d'un implant, de son extrémité supérieure à son extrémité inférieure. La direction transversale est définie comme une direction perpendiculaire à la direction longitudinale.

Par « col » on entend la partie supérieure du corps d'implant, au-dessus du corps principal. De manière plus générale, le col désigne la partie de plus grand diamètre agencée au niveau de l'extrémité supérieure d'un implant. Dans un mode de réalisation, le « col » désigne la partie de plus grand diamètre sous une partie biseautée ou présentant toute autre forme agencée à l'extrémité supérieure d'un implant. Le col est donc avantageusement positionné dans la zone supérieure sans filetage d'un implant.

Par « forme conique », on entend une portion ayant une section sensiblement circulaire et dont le diamètre décroit, de préférence de manière linéaire, dans une direction.

Selon le mode de réalisation de l'invention, l'invention consiste en un système d'implants 1 comprenant au moins deux implants dont le diamètre au point supérieur, notamment au niveau de leur col, est le même et dont le diamètre au niveau d'une portion inférieure est différent. Dans un système d'implants, tous les implants sont destinés à la restauration dentaire d'une même dent donnée, le choix de l'implant étant réalisé en fonction de la densité osseuse présente au niveau de ladite dent à restaurer. Ce système d'implants comprend avantageusement deux ou trois implants, optionnellement quatre ou plus. Naturellement, plusieurs systèmes d'implants sont prévus pour correspondre à des dents différentes à restaurer, avantageusement de manière adaptée à la restauration de toutes les dents.

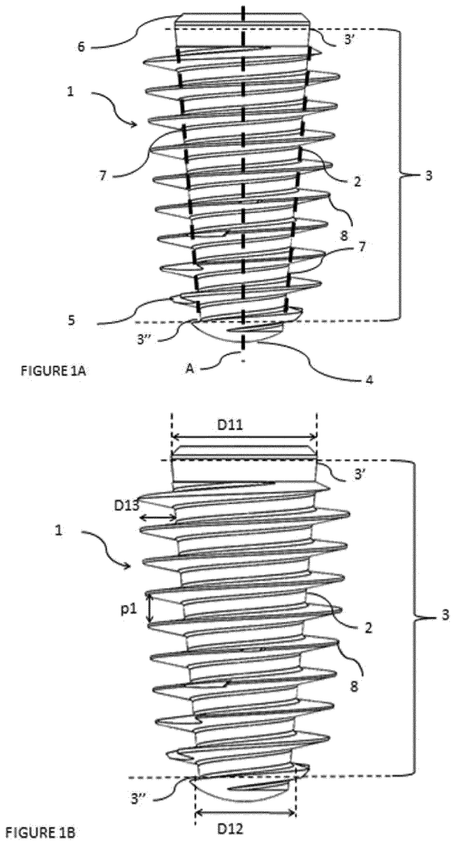

Un exemple d'un implant 1 est décrit ci-après en référence aux figures 1A et 1B.

Le premier implant 1 comprend un premier corps 2. Le premier corps 2 constitue une tige centrale de l'implant 1. Ce corps 2 forme le corps principal de l'implant, et sera indifféremment appelé « corps » ou « corps principal », il occupe la longueur et le volume le plus important. Il est complété par principalement deux portions supérieure et inférieure de géométrie spécifique à ses extrémités, et par un filetage sur sa périphérie. Le corps est donc considéré en faisant abstraction du filetage qui se rajoute sur sa périphérie.

L'implant 1 est conçu pour être introduit dans l'os alvéolaire de la mâchoire après qu'un trou y ait été préalablement percé. Le premier implant 1 est préférentiellement réalisé en titane, en alliage à base de titane ou en autre alliage biocompatible. Le premier implant 1 peut également être réalisé en dioxyde de zirconium, en alliage à base de dioxyde de zirconium, ou en polymère tel que le polyétheréthercétone.

La partie extérieure du corps principal présente une portion de forme conique depuis un point supérieur 3' vers un point inférieur 3". Le corps présente un diamètre, mesuré sur une section par un plan transversal, décroissant sur ladite portion vers le point inférieur 3". La forme conique permet d'insérer plus facilement l'implant 1 dans l'os et d'apporter une meilleure stabilité à l'implant 1 dans l'os.

Dans un mode de réalisation, l'implant 1 présente un diamètre qui évolue de manière décroissante ou strictement décroissante depuis le point supérieur 3' vers le point inférieur 3". Par « strictement décroissante », on entend ici que l'implant ne comprend pas de sous-portion sur laquelle le diamètre du corps est constant selon l'axe A et ne comprend pas de sous-portion sur laquelle le diamètre du corps est croissant vers la partie inférieure selon l'axe A entre le point supérieur 3' et le point inférieur 3". Ainsi, le corps principal 2 peut présenter une forme conique, par un seul cône ou par plusieurs portions coniques. En variante, le corps principal 2 pourrait présenter toute forme différente, de préférence présentant une section d'aire décroissante en se dirigeant vers sa partie inférieure. Cette section est de préférence circulaire, mais pourrait en variante présenter une autre forme : nous utiliserons dans tous les cas pour une raison de simplicité le terme de diamètre pour désigner la dimension de cette section, auquel cas ce diamètre serait celui du cercle le plus petit dans lequel la section transversale du corps principal serait inscrite si cette section n'est pas circulaire. En remarque, cette section transversale du corps principal de l'implant est considérée comme la section transversale de l'implant en faisant abstraction d'un filetage, selon la définition précisée ci-dessus du corps principal.

Comme illustré par la figure 1A, le premier implant 1 comprend un premier corps 2, une première partie filetée 8 disposée sur au moins une partie de la surface extérieure du premier corps 2 dans une forme hélicoïdale. Le premier implant peut comprendre une partie de guidage d'entrée 4 disposée sur la portion inférieure du premier corps 2. La partie filetée comprend une pluralité de spires ou de filets permettant d'augmenter la stabilité de l'implant et d'empêcher son retrait par translation longitudinale.

Comme illustré en pointillé sur la figure 1A, le premier corps 2 présente une portion conique de telle manière que le diamètre du corps 2 décroisse en direction de la partie de guidage d'entrée 4 (vers l'extrémité inférieure selon l'axe A longitudinal de l'implant).

Dans un mode de réalisation, le diamètre du corps sur la portion conique est linéaire ou sensiblement linéaire. Dans un mode de réalisation alternatif non-représenté, le diamètre du corps évolue de façon non-linéaire sur la portion conique.

Dans un mode de réalisation, la portion conique comprend un angle de pente variant d'environ 3° à environ 20°. Préférentiellement, l'angle de pente est d'environ 10°. L'angle de pente est préférentiellement constant le long de la portion conique.

Par « angle de pente » on entend ici l'angle formé par un axe 7 orienté vers le point inférieur 3" suivant le contour imaginaire de la partie conique 3 et l'axe A longitudinal du corps de l'implant.

L'angle de pente permet de définir une conicité de la portion conique.

Selon une autre variante de réalisation, le corps principal 2 ne comprend pas une forme conique.

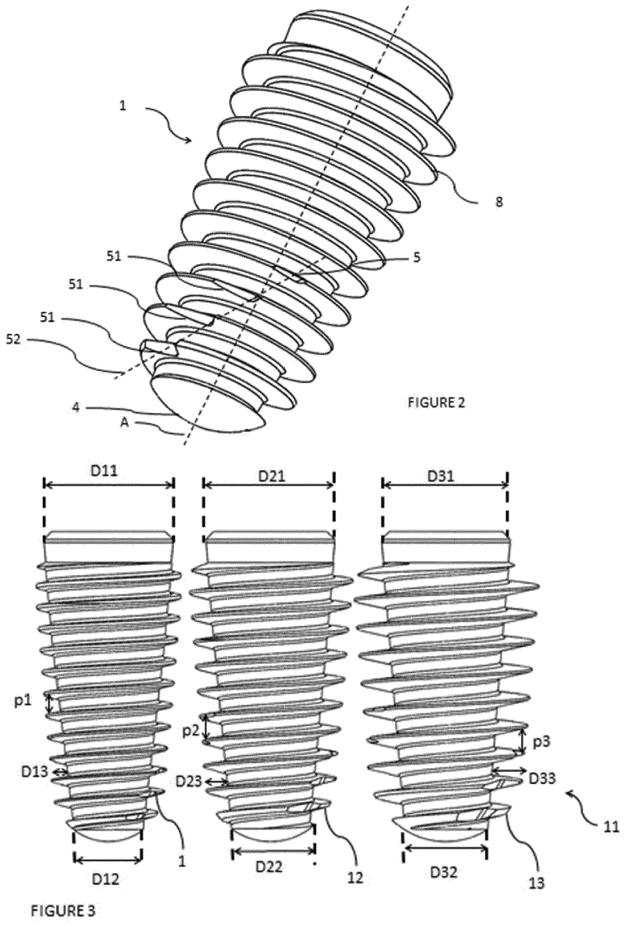

Comme illustré sur la figure 2, le premier implant 1 comprend au moins une portion de bords coupants 5 disposée dans la partie filetée 8. Cette portion de bords coupants 5 s'étend préférentiellement de manière oblique vers le bas le long d'une direction circonférentielle du corps. La portion de bords coupants 5 présente donc un angle avec l'axe A longitudinal du corps de l'implant 1. Cet angle peut varier d'environ 10° à environ 30°. Préférentiellement, cet angle est d'environ 20°.

La portion de bords coupants 5 est réalisée par au moins un évidement 51 sur une série de spires adjacentes. La direction oblique est donc définie par l'axe 52 reliant ces évidements 51.

Le au moins un évidement 51 est conçu pour former au moins une arête vive sur le bord de la spire ou sur le bord du filet. Cette au moins une arête vive autorise avantageusement le premier implant 1 à être plus facilement implanté dans l'os alvéolaire.

Pour former une portion de bords coupants 5 oblique, chaque évidement 51 est décalé angulairement avec l'évidement 51 de la spire adjacente. Préférentiellement, le décalage angulaire de l'évidement 51 entre chaque spire adjacente est conçu pour former une portion de bords coupants 5 selon une direction 52 circonférentielle rectiligne.

Cette portion de bords coupants 5 permet de faciliter l'insertion et la pénétration de l'implant 1 dans l'os alvéolaire lors de la rotation dudit implant 1.

Le corps 2 de l'implant 1 peut comprendre plusieurs portions de bords coupants 5. Dans ce mode de réalisation, les plusieurs portions de bords coupants 5 peuvent être environ régulièrement espacées radialement autour de la direction longitudinale du corps 2.

Dans un premier exemple, le corps 2 comprend deux portions de bords coupants 5 espacées de 180° autour de la direction longitudinale du corps 2. Dans un deuxième exemple, le corps 2 comprend trois portions de bords coupants 5 espacées de 120° autour de la direction longitudinale du corps 2. Dans un troisième exemple, le corps 2 comprend quatre portions de bords coupants 5 espacées de 90° autour de la direction longitudinale du corps 2.

Dans un mode de réalisation, le corps 2 comprend un nombre pair de portions de bords coupants 5. Les deux portions de bords coupants 5 en nombre pair sont disposées dans des positions opposées.

La partie de guidage d'entrée 4 est disposée de manière à s'étendre vers le haut depuis une extrémité inférieure de l'implant. Selon ce mode de réalisation, le corps principal 2 comprend au point inférieur 3" formant sa limite inférieure une interface avec la partie supérieure de la partie de guidage d'entrée 4. De cette manière, la partie de guidage d'entrée 4 guide le corps 2 lors de l'implantation de l'implant 1.

La partie de guidage d'entrée 4, comme illustré sur la figure 1A et la figure 2, comprend avantageusement une portion courbée. La partie de guidage 4 peut comprendre une portion courbée s'étendant sur toute sa hauteur.

Préférentiellement, la portion courbée comprend une portion de forme ellipsoïdique, hémisphérique ou de forme d'une portion d'une sphère. Cette portion ellipsoïdique ou hémisphérique est orientée vers la direction inférieure de manière à faciliter l'insertion de l'implant.

Dans un mode de réalisation, la partie de guidage d'entrée 4 est adjacente à la partie filetée 8. Dans un mode de réalisation alternatif, la partie filetée 8 et la partie de guidage d'entrée 4 se chevauchent. La partie de guidage d'entrée 4 comprend alors au moins une partie du filetage de la partie filetée 8.

La partie de guidage d'entrée 4 peut être réalisée comme une partie solidaire du corps 2 de l'implant 1.

La partie filetée 8 comprend un filetage ou une succession de filets. La partie filetée peut comprendre au moins la portion conique ou une partie de la portion conique.

D'autre part, le corps 2 de l'implant 1 peut comprendre une partie biseautée 6 au niveau de son extrémité supérieure. La partie biseautée 6 est disposée sur l'arête du côté supérieur du corps 2. La partie biseautée 6 a une surface pentue de manière à augmenter la surface de contact avec l'os alvéolaire et pour augmenter la force de la fixation.

De plus, le diamètre de la partie biseautée 6 se réduit vers l'extrémité supérieure de l'implant 1, pour permettre à l'implant 1 d'être difficilement détachable de l'os alvéolaire sans intervention d'un chirurgien.

L'angle entre la surface de la partie biseautée 6 et l'axe longitudinal du corps A de l'implant peut varier entre environ 30° et environ 65°.

Préférentiellement, la surface extérieure 62 de la partie biseautée 6 conçue pour être en contact avec l'os alvéolaire présente est une surface rugueuse. Ladite surface extérieure 62 rugueuse est préférentiellement obtenue par une opération de sablage. La rugosité Ra de ladite surface extérieure peut varier d'environ 1 à 2 µm, de préférence environ 1 ,4µm. Par « rugosité Ra », on entend ici la moyenne des valeurs absolues des écarts entre le profil et une ligne moyenne de ce profil.

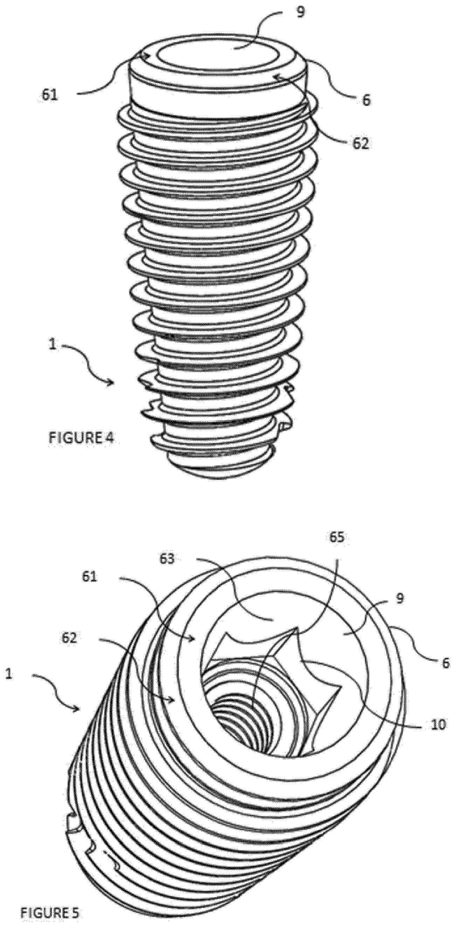

Comme illustré sur les figures 4 et 5, l'implant 1 comprend un moyen pour coopérer avec un pilier 14 qui servira de base pour la pose d'une dent artificielle.

L'implant 1 comprend une partie de connexion 9 agencée depuis une extrémité supérieure du corps 2 jusqu'à une profondeur prédéterminée.

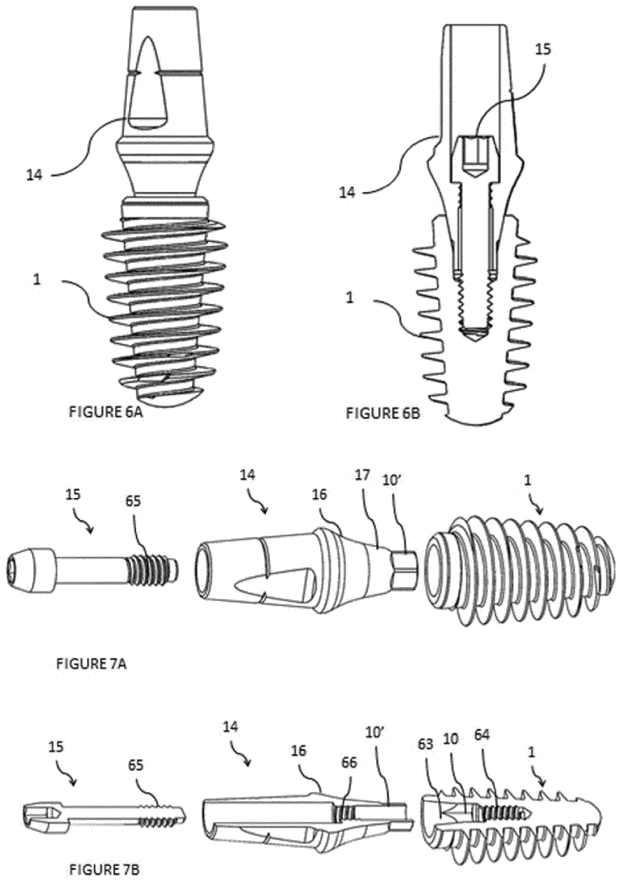

Cette partie de connexion 9 est destinée à recevoir une partie d'un pilier 14 pour sa fixation à l'implant 1 comme illustré par la figure 6A.

La partie de connexion 9 comprend une première surface 61 sur l'extrémité supérieure de l'implant 1.

La partie de connexion 9 comprend une première portion d'évidement 63, un moyen de coopération 10 et une deuxième portion d'évidement 64.

La première portion d'évidement 63 s'étend depuis la première surface 61 jusqu'au moyen de coopération 10. Préférentiellement, la première portion d'évidement est en forme de cône.

La deuxième portion d'évidement 64 s'étend depuis le moyen de coopération 10 vers la partie inférieure de l'implant 1. La deuxième portion d'évidement 64 peut comprendre un taraudage apte à recevoir une vis 15.

Le moyen de coopération 10 permet de coopérer avec un moyen de coopération 10' du pilier 14. Comme illustré sur la figure 5, le moyen de coopération 10 peut former un hexagone.

Un exemple d'un ensemble de restauration comprenant l'implant 1, un pilier 14 et une vis d'implant 15 est décrit ci-dessous en référence aux figures 6A à 7B.

Comme illustré sur la figure 7A, le pilier 14 comprend un corps de pilier 16. Le corps de pilier comprend, à une de ses extrémités longitudinales, un moyen de coopération 10' apte à coopérer avec le moyen de coopération 10 de l'implant. Le moyen de coopération 10' est préférentiellement de forme hexagonale. Le pilier peut comprendre une butée 17 pour venir en butée contre la première portion d'évidement 63 de l'implant 1. La butée est conçue de manière à stopper le déplacement du pilier 14 lors de son insertion dans l'implant 1. La butée 17 peut être en forme de cône.

Lors de l'insertion du pilier 14, le moyen de coopération du pilier 10' est inséré dans le moyen de coopération 10 de l'implant jusqu'à ce que la butée 17 rencontre la première portion d'évidement 63 de l'implant 1.

La coopération entre le pilier 14 et l'implant 1 permet ainsi de bloquer le pilier 14 en rotation ainsi qu'en translation vers la direction inférieure.

Préférentiellement, le corps de pilier 16 est tubulaire. Le corps de pilier tubulaire peut comprendre un taraudage 66 dans sa surface intérieure. Le taraudage est préférentiellement disposé à proximité du moyen de coopération 10' ou du cône 17.

Le corps de pilier 16 tubulaire autorise la pénétration d'une vis d'implant 15 à travers le pilier 14 et à travers la deuxième portion d'évidement 64 de l'implant 1.

Comme illustré sur les figures 6B et 7B, la vis d'implant 15 est conçue pour être insérée dans la deuxième portion d'évidement 64 de l'implant 1 à travers la tubulure du pilier 14. La vis d'implant comprend un filetage 65 apte à coopérer avec le taraudage de la deuxième portion d'évidement 64 et avec le taraudage 66 du pilier.

Une fois l'implant implanté, le pilier 14 est donc inséré dans la première portion d'évidement 63 de l'implant de manière à ce que les moyens de coopération coopèrent ensemble. Dans une autre étape, la vis 15 est vissée dans les taraudages du pilier 14 et de l'implant 1 comme illustrée figure 6B.

La vis garantit le serrage et la solidarité de la fixation entre le pilier 14 et l'implant 1.

Comme illustré par la figure 1B, le premier implant 1 comprend un premier diamètre D11 au niveau du col de l'implant, c'est-à-dire au point supérieur 3' du corps principal (au niveau de la jonction entre la partie biseautée 6 et la portion conique). Le diamètre au point supérieur D11 est le diamètre au niveau du col de l'implant.

De même, le corps du premier implant 1 comprend un deuxième diamètre D12 au point inférieur 3" du corps principal 2, particulièrement en limite inférieure de la partie conique formant le corps principal.

On note également D13 la profondeur du filet 8. Ladite profondeur D13 du filet est mesurée depuis le corps 2 d'implant jusqu'à l'extrémité radiale du filet, c'est-à-dire dans la direction transversale. Ainsi, le diamètre du filet correspond à la somme du diamètre du corps 2 d'implant et de deux fois ladite profondeur du filet.

Enfin, on note p1 le pas du filetage de l'implant 1 (c'est-à-dire la distance entre deux spires adjacentes, dans une direction sensiblement longitudinale).

Le système d'implants 1 selon le mode de réalisation décrit comprend un premier implant 1 tel que décrit ci-dessus et au moins un deuxième implant 12.

Comme illustré sur la figure 3, le deuxième implant 12 comprend le même premier diamètre supérieur que le premier implant 1, ou environ le même premier diamètre supérieur, c'est-à-dire sensiblement le même diamètre en partie supérieure du corps principal, au niveau du col, mais le deuxième diamètre D22 du deuxième implant 12 est différent du deuxième diamètre D12 du premier implant 1, c'est-à-dire que les deux corps principaux de chacun des deux implants comprennent un diamètre différent au niveau de leur partie inférieure, notamment au niveau de leur extrémité inférieure.

Le deuxième implant 12 comprend un deuxième corps, une deuxième partie filetée, une deuxième partie conique et préférentiellement une deuxième partie de guidage d'entrée.

Le deuxième implant 12 peut également comprendre une deuxième portion de bords coupants disposée dans la deuxième partie filetée et s'étendant de manière oblique vers le bas le long d'une direction circonférentielle du corps.

Le diamètre au point supérieur D11 de la première portion conique est sensiblement identique au diamètre au point supérieur D21 de la deuxième portion conique.

Par « sensiblement identique » on entend ici égal ou égal à plus ou moins 2%.

Cependant, le diamètre au point inférieur D12 de la portion conique est différent du diamètre D22 au point inférieur de la deuxième portion conique.

Par différent, on entend ici différent d'au moins 4%, voire d'au moins 5%. En remarque, en variante, on notera que la variation de dimension est plus importante en partie inférieure du corps principal de l'implant qu'en partie haute.

Préférentiellement, le diamètre D12 au point inférieur du corps principal du premier implant est plus petit que le diamètre D22 au point inférieur du corps principal du deuxième implant Le deuxième implant 12, par son diamètre plus important au point inférieur, permet avantageusement de condenser l'os alvéolaire lors de son implantation. La condensation de l'os alvéolaire au contact de l'implant permet d'augmenter la dureté locale de l'os alvéolaire et améliore la stabilité primaire de l'implant. Ce plus gros diamètre est ainsi particulièrement adapté à un os moins dense.

Dans un mode de réalisation, la profondeur D13 du filet de la première partie filetée est aussi différente de la profondeur D23 du filet de la deuxième partie filetée. En effet, la profondeur D13 de la première partie filetée est plus petite que la profondeur D23 du filet de la deuxième partie filetée.

De plus, le pas p1 entre deux filets du premier implant 1 est préférentiellement plus petit que le pas p2 du deuxième implant 12.

Le deuxième implant 12, par sa profondeur D23 et son pas p2 entre deux filets, permet avantageusement au filetage et aux spires de s'ancrer de manière plus optimale dans un os alvéolaire plus tendre en laissant plus de place à l'os. En effet, l'os alvéolaire plus tendre comprend des alvéoles plus grosses que les alvéoles d'un os alvéolaire plus dense. Ainsi, les alvéoles plus grosses ont plus de facilités à être conservées au milieu des spires si ces spires sont plus profondes et plus espacées les unes des autres.

La différence de conicité et/ou de diamètre au point inférieur de la portion conique permet à la partie inférieure du deuxième implant 12 de plus compacter l'os alvéolaire et ainsi assurer une plus grande stabilité au deuxième implant 12.

La plus grande profondeur de spires et le plus grand pas entre les filets autorisent un accrochage plus large du deuxième implant 12 donc une meilleure stabilité.

Le premier implant 1 est donc adapté pour l'implantation dans un os alvéolaire plus dur et/ou plus dense quand le deuxième implant 12 est plus adapté pour l'implantation dans un os alvéolaires moins dur et/ou moins dense.

Les deux implants comprennent des corps principaux dont la section évolue de manière continue dans la direction longitudinale. Le fait de présenter un diamètre plus important d'au moins une section transversale en partie inférieure du deuxième implant par rapport à la même section transversale du premier implant permet au deuxième implant de présenter globalement un volume plus important dans cette portion avoisinant cette section transversale, et d'être plus adapté à un os moins dur. Selon un mode de réalisation, la section transversale des corps principaux est décroissante sur toute leur longueur longitudinale, et cette section transversale en partie inférieure peut être considérée sur toute partie de la moitié inférieure des corps principaux, et notamment au niveau de son extrémité inférieure (au point inférieur).

Naturellement, en variante, le deuxième implant pourrait comprendre seulement un diamètre différent en partie inférieure et un filetage sensiblement identique.

En remarque complémentaire, chaque implant comprend un filetage tel que le diamètre le plus grand de ses spires est supérieur au diamètre du col. Du fait de leurs géométries décrites ci-dessus, ce diamètre le plus grand se trouve en partie supérieure du filetage, et donc à proximité du col de l'implant. Cette construction permet une stabilité de l'implant par un ancrage satisfaisant par l'intermédiaire de ses filets, et non par un appui du col sur l'os cortical qui aurait pour effet de surcharger cet os cortical. Dans les modes de réalisation, la profondeur des spires est importante, de sorte que le diamètre de plusieurs spires, par exemple deux, ou au moins deux, ou trois, ou plus de trois spires, consécutives, est supérieur au diamètre du col.

En remarque complémentaire, le diamètre de la ou des spires positionnées à proximité de la partie inférieure est aussi avantageusement supérieur au diamètre de cette partie inférieure.

Dans un mode de réalisation, le système d'implants 1 comprend un premier implant 1, un deuxième implant 12 et un troisième implant 13, ce troisième implant étant adapté pour des os alvéolaires encore plus mous et/ou encore moins dense.

Comme illustré sur la figure 3, le troisième implant 13 comprend un premier diamètre D31 sensiblement égal aux premiers diamètres D21 et D11, mais le deuxième diamètre D32 du troisième implant 13, dans une partie inférieure, est plus grand que le deuxième diamètre D22 du deuxième implant 12.

Dans un mode de réalisation, la profondeur D33 du filet de la partie filetée du troisième implant 13 est plus grande que la profondeur D23 du filet du deuxième implant 12. Dans un mode de réalisation, le pas p3 entre deux filets du troisième implant 13 est plus grand que le pas p2 entre deux filets du deuxième implant 12.

Le premier implant 1 est donc plus adapté pour un os dur et dense. Le troisième implant 13 est donc plus adapté pour un os tendre et peu dense et le deuxième implant 12 est donc plus adapté pour un os dont la dureté et la densité est intermédiaire.

Les trois implants présentent des spires de grand diamètre, dont au moins une spire présente un diamètre supérieur au diamètre du col.

La solution concerne également un procédé de définition d'une restauration dentaire pour le remplacement d'une dent donnée d'un patient.

Le procédé comprend une étape de sélection d'un implant en fonction de la densité osseuse présente au niveau de la dent donnée.

Dans un mode de réalisation, la détermination ou une estimation de la densité osseuse présente au niveau de la dent donnée est réalisée par une étape de mesure préliminaire.

L'étape de sélection d'un implant est réalisée parmi au moins deux implants présentant un corps principal de même diamètre au niveau de leur col et/ou au niveau de leur extrémité supérieure et un diamètre différent au niveau de la partie inférieure de l'implant. L'étape de sélection d'un implant peut se faire parmi les implants décrits ci-dessus.

Dans un mode de réalisation, la conicité du premier implant et du deuxième implant est différente. Les plusieurs implants peuvent comprendre des filets de diamètres différents d'un implant à l'autre. Comme décrit ci-dessus, le diamètre en partie inférieure et le diamètre des filets et/ou la profondeur des filets d'un premier implant sont préférentiellement respectivement supérieurs au diamètre en partie inférieure et le diamètre des filets et/ou la profondeur des filets d'un deuxième implant.

Ainsi, lors de la pose d'un implant (non-revendiqué), un trou est percé dans l'os alvéolaire de la mâchoire grâce à une mèche (non-représentée).

Dans un mode de réalisation, une étape de la mesure ou d'estimation de la dureté de l'os alvéolaire peut se faire avant ou pendant le perçage. Une fois le trou foré, le chirurgien peut choisir l'implant le plus adéquat en fonction de la dureté et de la densité de l'os alvéolaire. Par exemple, la dureté ou la densité de l'os alvéolaire peut être déterminée par la lecture d'une radiographie de l'os. La dureté ou la densité peut être ensuite confirmée par l'opérateur pendant le forage de l'os, en fonction de l'effort nécessaire pour forer l'os alvéolaire. Plus l'effort de forage est important, plus l'os est dur et dense.

Ensuite, l'implant le plus adéquat est inséré dans le trou foré de manière à ce que la partie de guidage d'entrée 4 puisse être insérée sans à-coups dans le trou percé. La partie de guidage d'entrée 4 va ensuite suivre le trou percé de manière à ce que la direction longitudinale de l'implant soit sensiblement orientée dans la même direction que la direction longitudinale du trou percé.

Une fois que la direction d'implantation est fixée par la partie de guidage d'entrée 4, le premier implant 1 est inséré par vissage ou par rotation dans le volume de l'os alvéolaire grâce à la rotation de la partie filetée.

Par la suite, le pilier 14 peut être monté sur la partie de connexion de l'implant inséré dans l'os alvéolaire et la vis de serrage 15 peut être vissée dans l'implant à travers le pilier 14, formant ainsi un ensemble de restauration.

Naturellement, l'invention est définie dans les revendications.

Notamment, le corps principal de l'implant peut comprendre toute autre forme qu'une forme conique. Cette forme comprend une partie supérieure ou partie coronaire (comprenant le col) comprenant une même géométrie et une partie inférieure ou partie apicale de géométrie différente, l'un des implants comprenant une partie inférieure de plus grand volume que l'autre, pour augmenter son ancrage dans un os tendre. Pour cela, cet implant comprend au moins une section transversale de plus grande aire au niveau de la partie inférieure, voire de préférence sur toute une portion en partie inférieure, dont toutes les sections transversales présentent une aire supérieure, relativement à l'aire ou aux aires de la ou des mêmes section(s) transversale(s) de l'autre implant. Dans le même temps, le filetage de cet implant de plus grand volume est de préférence aussi augmenté, particulièrement son pas et/ou sa profondeur, pour un ancrage optimal dans l'os. De plus, la longueur de ces corps principaux et/ou des implants est la même.

Ainsi, chaque implant peut par exemple comprendre un corps à double conicité, comprenant une partie supérieure formant une première portion conique, et une partie inférieure formant une deuxième portion conique différente de la première : dans ce cas, les deux implants différents peuvent comprendre la même partie supérieure et des parties inférieures différentes.

Nous avons vu que les au moins deux implants présentant un même diamètre au niveau de leur col présentent un diamètre différent généralement au niveau de leur extrémité inférieure.

De plus, ils pourraient présenter un volume différent en partie inférieure en considérant toute autre zone de cette partie inférieure que l'extrémité.

Le filetage pourrait aussi présenter toute autre forme que celle décrite précédemment. Avantageusement, le filetage est en forme de spirale. Selon un mode de réalisation, le filetage peut comprendre une double spire pour réduire le temps de vissage et les échauffements lors du vissage. De plus, avantageusement, le diamètre d'au moins une spire du filetage, notamment en partie supérieure du filetage à proximité du col de l'implant, est strictement supérieur au diamètre du col.

De plus, comme cela a été décrit, il est avantageux de choisir une famille d'implants de même diamètre supérieur d'au moins deux implants, voire d'au moins trois implants. Cette famille d'implants forme un système d'implants destinés à participer à une restauration d'une même dent, l'implant étant choisi en fonction de la densité osseuse au niveau de la dent à restaurer.

Avantageusement, il est possible d'utiliser les systèmes d'implants suivants :
- un premier système de deux ou trois implants présentant un diamètre au col d'environ 3,3 mm, et un diamètre inférieur respectivement d'environ 2,2 mm, de 2,3 mm et 2,4 mm et un filetage de diamètres respectivement d'environ 3,6, 4,1 et 4,6 mm.
- un deuxième système présentant un diamètre au col d'environ 4,1 mm, et un diamètre inférieur respectivement d'environ 2,2 mm et de 2,3 mm et un filetage de diamètres d'environ 4,6 et 5,3 mm. Un troisième implant peut comprendre un diamètre au col d'environ 4,1 mm, un diamètre inférieur respectivement d'environ 2,4 mm et un diamètre de filetage d'environ 6 mm.
- un troisième système présentant un diamètre au col d'environ 4,8 mm, et un diamètre inférieur respectivement d'environ 2,8 mm et de 3 mm et un filetage de diamètres d'environ 6 et 6,8 mm. Un troisième implant peut comprendre un diamètre au col d'environ 4,8 mm, un diamètre inférieur respectivement d'environ 3,2 mm et un diamètre d'environ filetage de 7,5 mm.

## Revendications

1. Système d'implants (11) comprenant au moins deux implants (1, 12) destinés au remplacement d'une même dent donnée d'un patient lors d'une restauration dentaire, choisis en fonction de la densité osseuse présente au niveau de la dent à restaurer, lesdits au moins deux implants présentant un corps principal, constituant une tige centrale des implants, sensiblement de même diamètre au niveau de leur col et de diamètre différent sur au moins une section transversale en partie inférieure de l'implant les au moins deux implants comprenant des filets, et le diamètre maximal du filet de chaque implant étant supérieur audit diamètre au niveau de leur col.

2. Système d'implants (11) selon la revendication précédente, **caractérisé en ce que** les au moins deux implants comprennent des filets différents, notamment dont la profondeur et/ou le pas est différent.

3. Système d'implants (11) selon l'une des revendications précédentes, **caractérisé en ce que** les au moins deux implants comprennent des filets différents et **en ce que** le diamètre de la au moins une section transversale en partie inférieure, et la profondeur des filets et/ou le pas des filets, d'un premier implant sont respectivement inférieurs au diamètre de la au moins une même section transversale en partie inférieure, et à la profondeur des spires et/ou au pas des filets, d'un deuxième implant.

4. Système d'implants (11) selon l'une des revendications précédentes, **caractérisé en ce qu'**il comprend trois implants présentant un corps principal sensiblement de même diamètre au niveau de leur col et de diamètre différent au niveau d'au moins une section transversale en partie inférieure, lesdits trois implants étant de plus **caractérisés par** :
- un premier implant comprenant un premier diamètre au niveau d'au moins une section transversale en partie inférieure et un filet comprenant un premier pas et une première profondeur ;
- un deuxième implant comprenant un deuxième diamètre au niveau de la au moins une même section transversale en partie inférieure supérieur au premier diamètre, et un filet comprenant un deuxième pas et une deuxième profondeur, ledit deuxième pas et/ou la deuxième profondeur étant respectivement supérieur.e.s audit premier pas et/ou à ladite première profondeur ;
- un troisième implant comprenant un troisième diamètre au niveau d'au moins une section transversale en partie inférieure supérieur au deuxième diamètre, et un filet comprenant un troisième pas et une troisième profondeur, ledit troisième pas et/ou la troisième profondeur étant respectivement supérieur.e.s audit deuxième pas et/ou à ladite deuxième profondeur.

5. Système d'implants (11) selon l'une des revendications précédentes, **caractérisé en ce que** le corps principal des au moins deux implants présente une ou plusieurs partie.s conique.s de conicité différente et/ou **en ce que** le corps principal des au moins deux implants présente une section transversale d'aire décroissante longitudinalement d'une zone supérieure vers son extrémité inférieure.

6. Système d'implants (11) selon l'une des revendications précédentes, **caractérisé en ce que** chacun des corps principaux des au moins deux implants (1, 12) comprend en outre une partie de guidage d'entrée (4) s'étendant depuis une extrémité inférieure du corps principal, cette partie de guidage (4) comprenant une portion hémisphérique.

7. Système d'implants (11) selon l'une des revendications précédentes, **caractérisé en ce que** chacun des corps principaux des au moins deux implants comprend au moins une portion de bords coupants (5) disposée dans le filetage et s'étendant de manière oblique vers la portion de guidage d'entrée le long d'une direction circonférentielle du corps.

8. Système d'implants (11) selon l'une des revendications précédentes, **caractérisé en ce que** le col des au moins deux implants comprend une partie biseautée (6) au niveau d'une extrémité supérieure.

9. Système d'implants (11) selon la revendication précédente **caractérisé en ce que** la partie biseautée (6) présente une surface extérieure (62) rugueuse, notamment obtenue par sablage.

10. Système d'implants (11) selon l'une des revendications précédentes, **caractérisé en ce que** chaque implant comprend une partie de connexion (9) identique destinée à recevoir une partie d'un pilier (14) pour sa fixation à l'implant (1).

11. Ensemble de restauration **caractérisé en ce qu'**il comprend un système d'implant selon l'une des revendications précédentes et **en ce qu'**il comprend en outre une vis d'implant (15) et un pilier (14), la vis (15) d'implant étant apte à fixer ledit pilier (14) sur chaque implant dudit système d'implants.

## Patentansprüche

1. Implantatsystem (11), das wenigstens zwei Implantate (1, 12) umfasst, die für den Ersatz ein und desselben bestimmten Zahns eines Patienten bei einer Zahnrestauration bestimmt sind, die je nach der im Bereich des zu restaurierenden Zahns vorhandenen Knochendichte gewählt werden, wobei die wenigstens zwei Implantate einen Hauptkörper aufweisen, der einen Mittelstift der Implantate bildet, mit im Wesentlichen gleichem Durchmesser im Bereich ihres Halses und mit unterschiedlichem Durchmesser über wenigstens einen Querschnitt im unteren Abschnitt des Implantats, wobei die wenigstens zwei Implantate Gewinde umfassen und der Maximaldurchmesser des Gewindes jedes Implantats größer als der Durchmesser im Bereich ihres Halses ist.

2. Implantatsystem (11) nach dem vorhergehenden Anspruch, **dadurch gekennzeichnet, dass** die wenigstens zwei Implantate unterschiedliche Gewinde, insbesondere mit unterschiedlicher Tiefe und/oder Steigung umfassen.

3. Implantatsystem (11) nach einem der vorhergehenden Ansprüche, **dadurch gekennzeichnet, dass** die wenigstens zwei Implantate unterschiedliche Gewinde umfassen, und dadurch, dass der Durchmesser des wenigstens einen Querschnitts im unteren Abschnitt und die Tiefe der Gewinde und/oder die Steigung der Gewinde eines ersten Implantats kleiner als der Durchmesser des wenigstens einen gleichen Querschnitts im unteren Abschnitt bzw. die Tiefe der Windungen und/oder die Steigung der Gewinde eines zweiten Implantats sind.

4. Implantatsystem (11) nach einem der vorhergehenden Ansprüche, **dadurch gekennzeichnet, dass** es drei Implantate umfasst, die einen Hauptkörper mit im Wesentlichen demselben Durchmesser im Bereich ihres Halses und unterschiedlichem Durchmesser im Bereich wenigstens eines Querschnitts im unteren Abschnitt aufweisen, wobei die drei Implantate zudem durch Folgendes gekennzeichnet sind:
- ein erstes Implantat, das einen ersten Durchmesser im Bereich wenigstens eines Querschnitts im unteren Abschnitt und ein Gewinde umfasst, das eine erste Steigung und eine erste Tiefe umfasst;
- ein zweites Implantat, das einen zweiten Durchmesser im Bereich des wenigstens einen gleichen Querschnitts im unteren Abschnitt, der größer als der erste Durchmesser ist, und ein Gewinde umfasst, das eine zweite Steigung und eine zweite Tiefe umfasst, wobei die zweite Steigung und/oder die zweite Tiefe jeweils größer als die erste Steigung und/oder die erste Tiefe ist bzw. sind;
- ein drittes Implantat, das einen dritten Durchmesser im Bereich wenigstens eines Querschnitts im unteren Abschnitt, der größer als der zweite Durchmesser ist, und ein Gewinde umfasst, das eine dritte Steigung und eine dritte Tiefe umfasst, wobei die dritte Steigung und/oder die dritte Tiefe jeweils größer als die zweite Steigung und/oder die zweite Tiefe ist bzw. sind.

5. Implantatsystem (11) nach einem der vorhergehenden Ansprüche, **dadurch gekennzeichnet, dass** der Hauptkörper der wenigstens zwei Implantate einen oder mehrere kegelförmige Abschnitte mit verschiedener Konizität aufweist, und/oder dadurch, dass der Hauptkörper der wenigstens zwei Implantate einen Querschnitt mit einem Flächeninhalt aufweist, der von einem oberen Bereich hin zu seinem unteren Ende in Längsrichtung abnimmt.

6. Implantatsystem (11) nach einem der vorhergehenden Ansprüche, **dadurch gekennzeichnet, dass** jeder der Hauptkörper der wenigstens zwei Implantate (1, 12) ferner einen Eintrittsführungsabschnitt (4) umfasst, der sich von einem unteren Ende des Hauptkörpers erstreckt, wobei dieser Führungsabschnitt (4) einen halbkugelförmigen Abschnitt umfasst.

7. Implantatsystem (11) nach einem der vorhergehenden Ansprüche, **dadurch gekennzeichnet, dass** jeder der Hauptkörper der wenigstens zwei Implantate wenigstens einen Abschnitt mit Schneidrändern (5) umfasst, der im Gewinde angeordnet sind und sich entlang einer Umfangsrichtung des Körpers schräg in Richtung des Eintrittsführungsabschnitts erstreckt.

8. Implantatsystem (11) nach einem der vorhergehenden Ansprüche, **dadurch gekennzeichnet, dass** der Hals der wenigstens zwei Implantate einen angeschrägten Abschnitt (6) im Bereich eines oberen Endes umfasst.

9. Implantatsystem (11) nach dem vorhergehenden Anspruch, **dadurch gekennzeichnet, dass** der angeschrägte Abschnitt (6) eine raue, insbesondere durch Sandstrahlen erzielte Außenfläche (62) aufweist.

10. Implantatsystem (11) nach einem der vorhergehenden Ansprüche, **dadurch gekennzeichnet, dass** jedes Implantat einen identischen Verbindungsabschnitt (9) umfasst, der dazu bestimmt ist, einen Abschnitt eines Pfostens (14) für dessen Befestigung am Implantat (1) aufzunehmen.

11. Restaurierungsanordnung, **dadurch gekennzeichnet, dass** sie ein Implantatsystem nach einem der vorhergehenden Ansprüche umfasst, und dadurch, dass sie ferner eine Implantatschraube (15) und einen Pfosten (14) umfasst, wobei die Implantatschraube (15) geeignet ist, den Pfosten (14) auf jedem Implantat des Implantatsystems zu befestigen.

## Claims

1. Implant system (11) comprising at least two implants (1, 12) intended for the replacement of a given same tooth of a patient in restorative dentistry, chosen as a function of the bone density present at the tooth to be restored, said at least two implants having a main body, constituting a central rod of the implants, substantially of the same diameter at the neck thereof and of different diameter over at least one cross-section in the lower part of the implant, the at least two implants comprising threads, and the maximum diameter of the thread of each implant being greater than said diameter at the neck thereof.

2. Implant system (11) according to the preceding claim, **characterized in that** the at least two implants comprise different threads, notably of which the depth and/or the pitch is different.

3. Implant system (11) according to one of the preceding claims, **characterized in that** the at least two implants comprise different threads and **in that** the diameter of the at least one cross-section in the lower part, and the depth of the threads and/or the pitch of the threads, of a first implant, are respectively less than the diameter of the at least one cross-section in the lower part, and than the depth of the turns and/or the pitch of the threads, of a second implant.

4. Implant system (11) according to one of the preceding claims, **characterized in that** it comprises three implants having a main body substantially of the same diameter at the neck thereof and of different diameter at at least one cross-section in the lower part, said three implants being further **characterized by**:
- a first implant comprising a first diameter at at least one cross-section in the lower part and a thread comprising a first pitch and a first depth;
- a second implant comprising a second diameter at the at least one same cross-section in the lower part greater than the first diameter, and a thread comprising a second pitch and a second depth, said second pitch and/or the second depth being respectively greater than said first pitch and/or than said first depth;
- a third implant comprising a third diameter at at least one cross-section in the lower part greater than the second diameter, and a thread comprising a third pitch and a third depth, said third pitch and/or the third depth being respectively greater than said second pitch and/or than said second depth.

5. Implant system (11) according to one of the preceding claims, **characterized in that** the main body of the at least two implants has one or more conical parts of different coning and/or **in that** the main body of the at least two implants has a cross-sectional area that decreases longitudinally from an upper zone to its bottom end.

6. Implant system (11) according to one of the preceding claims, **characterized in that** each of the main bodies of the at least two implants (1, 12) further comprises an input guiding part (4) extending from a bottom end of the main body, this guiding part (4) comprising a hemispherical portion.

7. Implant system (11) according to one of the preceding claims, **characterized in that** each of the main bodies of the at least two implants comprises at least one portion of cutting edges (5) disposed in the threading and extending obliquely towards the input guiding portion along a circumferential direction of the body.

8. Implant system (11) according to one of the preceding claims, **characterized in that** the neck of the at least two implants comprises a bevelled part (6) at a top end.

9. Implant system (11) according to the preceding claim, **characterized in that** the bevelled part (6) has a rough outer surface (62), notably obtained by blasting.

10. Implant system (11) according to one of the preceding claims, **characterized in that** each implant comprises an identical connection part (9) intended to receive a part of an abutment (14) for the fixing thereof to the implant (1).

11. Restoration assembly, **characterized in that** it comprises an implant system according to one of the preceding claims and **in that** it further comprises an implant screw (15) and a abutment (14), the implant screw (15) being able to fix said abutment (14) to each implant of said implant system.
